# DEMANDE DE BREVET EUROPEEN

(11) **EP 1 679 442 A1**
(43) Date de publication de la demande: **12.07.2006**
(21) Numéro de dépôt: 06300024.4
(22) Date de dépôt: 11.01.2006
(51) Int. Cl.: F16B 2/24, B62D 65/14, B62D 25/14

(54) **Ensemble d'un premier et deuxième éléments d'un véhicule automobile muni de moyens de centrage automatique du premier élément relativement au deuxième éléments, et procédé d'assemblage d'un tel ensemble**

(30) Priorité: 11.01.2005 FR 0550095
(71) Demandeur: Renault s.a.s., 92100 Boulogne Billancourt (FR)
(72) Inventeur: Dargent, Frédéric, 78210 SAINT CYR L'ECOLE (FR); Valleix, Jean-Michel, 92100, BOULOGNE BILLANCOURT (FR)

(57) **Abrégé**

La présente invention a principalement pour objet un véhicule automobile, comportant une caisse et une planche de bord ainsi que des moyens de centrage automatique de la planche de bord (10) relativement à la caisse. De manière avantageuse, les moyens de centrage automatique sont formés par des lames de ressort (22) interposées entre la planche de bord et la caisse.

## Description

### DOMAINE TECHNIQUE ET ART ANTÉRIEUR

La présente invention se rapporte principalement à un ensemble d'un premier et deuxième éléments d'un véhicule automobile comportant des moyens de centrage automatiques du premier élément relativement au deuxième élément, et à un procédé de d'assemblage d'un tel ensemble.

Les constructeurs automobiles recherchent en permanence des gains de productivité, pour cela ils souhaitent réduire les temps de fabrication des véhicules automobiles, tout en améliorant la qualité de fabrication.

Ils recherchent alors des dispositifs permettant des montages automatiques et précis des différents éléments composant un véhicule automobile.

En particulier, un véhicule automobile comporte une caisse dans laquelle doit être montée une planche de bord sur laquelle seront disposées toutes les commandes utiles au conducteur pour conduire le véhicule. Pour des raisons de qualité de fabrication, il est nécessaire que cette planche de bord soit disposée précisément relativement à la caisse du véhicule, en particulier cette planche de bord doit être centrée par rapport aux flancs de la caisse du véhicule automobile.

Il est connu divers procédés de fabrication, en particulier de montage de la planche de bord par rapport à la caisse utilisant un outillage mesurant la distance séparant les flancs de la caisse, déterminant en fonction de cette mesure et des dimensions de la planche de bord, la distance devant séparer les extrémités transversales de la planche de bord des flancs de la caisse, disposant correctement la planche de bord par rapport aux flancs du véhicule et l'immobilisant par des moyens de serrage.

Or il apparaît que cet outillage est très complexe et que le taux de montages défectueux est élevé.

Il est également connu une planche de bord comportant un doigt disposé sensiblement dans la partie centrale de la planche de bord et destiné à pénétrer dans une ouverture, de dimension sensiblement égale à celle du doigt, pratiquée dans la caisse. Lors du montage, lorsque la planche de bord est approchée de la caisse, le doigt pénètre dans l'ouverture pratiquée dans la caisse et centre automatiquement la planche de bord par rapport à la caisse. Cependant cette technique impose une grande précision au niveau de la réalisation du doigt et de l'ouverture.

Il existe enfin un autre type de montage dans lequel la planche de bord comporte une extension axiale venant coopérer avec un système vis-écrou monté sur le tablier. Ainsi, lorsque la planche de bord est approchée du tablier, l'extension axiale entoure l'ensemble vis-écrou. Deux opérateurs sont nécessaires, ceux-ci déplacent plus au moins transversalement la planche de bord et ensuite l'ensemble vis-écrou est serré autour de l'extension axiale de la planche de bord de manière à fixer définitivement la position transversale de la planche de bord, relativement au véhicule automobile.

Ce procédé de montage, d'une part nécessite, comme on l'a déjà dit, deux opérateurs et d'autre part, est très long. Par conséquent, le prix de revient de fabrication du véhicule automobile en est augmenté.

C'est par conséquent un but de la présente invention de proposer des moyens de centrage automobile de la planche de bord relativement à la caisse d'un véhicule automobile offrant une grande précision de montage ainsi qu'une grande simplicité de montage.

C'est également un but de la présente invention d'offrir des moyens de centrage automatique d'un prix de revient faible.

C'est également un but de la présente invention d'offrir un procédé de montage rapide et simplifié tout en étant d'une grande précision et offrant des véhicules de bonne qualité de montage.

### EXPOSÉ DE L'INVENTION

Ces buts sont atteints par un véhicule automobile comportant une caisse dans lequel doit être montée une planche de bord de manière centrée entre des premier et deuxième montants transversaux de la caisse, le véhicule automobile comportant également des entretoises disposées entre la planche de bord et les premier et deuxième montants, ces entretoises exerçant un premier et deuxième efforts élastiques opposés de même direction de manière à compenser et à équilibrer de manière automatique la position de la planche de bord relativement aux montants de la caisse.

En d'autres termes, la planche de bord est soumise à un équilibre des forces qui la positionne automatiquement au centre des montants de la caisse, ne nécessitant aucun réglage ultérieur par des opérateurs.

La présente invention a par conséquent principalement pour objet un ensemble d'un premier et deuxième éléments d'un véhicule automobile, le premier élément étant délimité par au moins une première et une deuxième extrémités transversales destinées à s'insérer au moins en partie entre une troisième et quatrième extrémités transversales respectivement, lesdites troisième et quatrième extrémités délimitant transversalement au moins partiellement le deuxième élément, caractérisé en ce qu'il comporte des premier et deuxième moyens de centrage automatique du premier élément dans le deuxième élément, lesdits moyens de centrage automatique étant destinés à être disposés respectivement entre la première et la troisième extrémités et entre la deuxième et quatrième extrémités.

De manière avantageuse, les premier et deuxième moyens sont des moyens élastiquement déformables destinés à appliquer respectivement un premier et deuxième efforts de même intensité, de même direction transversale et de sens opposé.

Dans un mode de réalisation, le premier élément comporte une traverse et un premier et deuxième pans perpendiculaires à la traverse, destinés à pénétrer entre la troisième et la quatrième extrémités du deuxième élément, et dans lequel les première et deuxième extrémités transversales sont respectivement portées par les premier et deuxième pans.

Dans un autre mode de réalisation, le premier élément comporte une traverse délimitée transversalement par les première et deuxième extrémités transversales.

L'invention est particulièrement avantageuse dans le cas où le premier élément est formé par une planche de bord du véhicule automobile et le deuxième élément est formé par une caisse du véhicule automobile.

De manière préférentielle, les premier et deuxième moyens de centrage automatique sont fixés sur la caisse.

De façon avantageuse, chaque moyen de centrage automatique est formé par une lame de ressort convexe. Les lames de ressort peuvent comporter des première et deuxième extrémités axiales, par lesquelles elles sont fixées à la caisse.

Dans un mode de réalisation, la fixation des lames de ressort à la caisse s'effectue par vissage.

De façon avantageuse, l'ensemble selon la présente invention comporte également des moyens de positionnement axial et vertical du premier élément relativement au deuxième élément.

Les moyens de positionnement vertical comportent au moins une extension axiale sur au moins le premier ou le deuxième élément, et un orifice pratiqué dans au moins l'un ou l'autre du deuxième ou premier élément.

On peut également prévoir que les moyens de positionnement vertical comportent deux extensions axiales sur au moins le premier ou le deuxième éléments et deux orifices pratiqués dans au moins l'un ou l'autre du deuxième ou premier élément.

La présente invention a également pour objet un procédé d'assemblage d'un ensemble selon la présente invention caractérisé en ce qu'il comporte entre autre une étape préalable de fixation des première et deuxième lames de ressort sur la caisse et une étape ultérieure d'insertion de la planche de bord entre les troisième et quatrième extrémités transversales de la caisse.

La présente invention sera mieux comprise à l'aide de la description qui va suivre et des figures en annexes sur lesquels les parties avant et arrière correspondent aux parties gauche et droite respectivement des dessins.

### BRÈVE DESCRIPTION DES DESSINS

- La figure 1 est une vue de dessus schématique d'une caisse et d'une planche de bord selon la présente invention avant montage.
- La figure 2 est une vue de dessus d'un véhicule selon la présentation après montage de la planche de bord dans la caisse.
- La figure 3 est une vue de trois d'un détail de la figure 1.

### EXPOSÉ DÉTAILLÉ DE MODES DE RÉALISATION PARTICULIERS

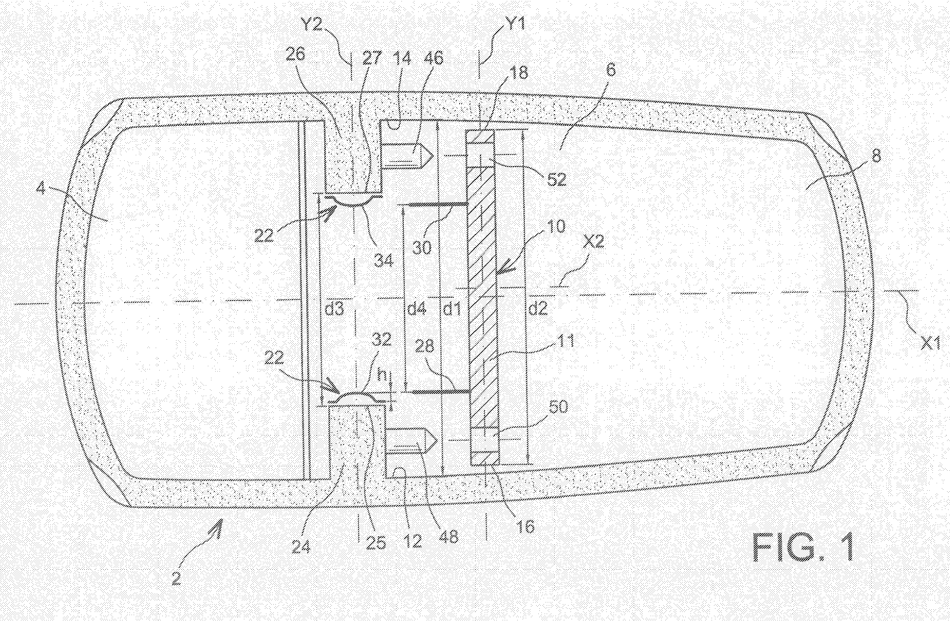

Sur la figure 1, on peut voir un véhicule automobile avant montage de la planche de bord comportant une caisse 2 de forme sensiblement rectangulaire d'axe longitudinal X1, divisée en un premier espace avant 4 appelé compartiment moteur et recevant de manière usuelle les moyens de propulsion (non représentés) du véhicule automobile, un espace central 6 dénommé habitacle destiné à recevoir le conducteur automobile et un espace arrière 8 appelé coffre destiné à recevoir par exemple des bagages. On peut voir également une planche de bord 10 s'étendant transversalement entre un premier et deuxième flancs 12,14 transversaux de la caisse, séparés d'une distance d1.

La planche 10 comporte une traverse 11 d'axe transversal Y1 munie d'une première 16 et deuxième 18 extrémités transversales séparées d'une distance d2. Après montage, les première et deuxième extrémités 16, 18 de la planche 10 doivent être séparées respectivement des premier et deuxième flancs 12,14 d'une distance D sensiblement égale(d1-d2)/2.

La présente invention propose des moyens 22 de mise en position automatique des première et deuxième extrémités 16,18 de la planche de bord 10 par rapport aux premier et deuxième flancs 12,14 de la caisse à la distance D.

Dans un exemple de réalisation, la caisse comporte un rétrécissement transversal délimité par des première 24 et deuxième 26 saillies transversales (ou boîtiers) s'étendant vers l'axe X1, et délimitant un passage de dimension transversale d3 inférieure à d1. Les saillies sont par exemple formées directement par emboutissage de la tôle de la caisse ou rapportées sur la caisse par soudure ou vissage. Les saillies sont délimitées en direction de l'axe X1 par une première 25 et deuxième 27 faces planes. Le rétrécissement est destiné à recevoir une cheminée 24 d'axe X2 délimitée par une première 28 et deuxième 30 extensions axiales s'étendant vers l'avant, solidaires de la traverse 11, disposées à équidistances de l'axe X2 et séparées d'une distance d4.

Les extensions axiales 28,30 sont par exemple formées par des pans de tôle soudés sur l'élément 11.

Il est alors souhaité que la distance D' séparant les pans 28,30 des faces 25,27 respectivement soit égale à (d3-d4)/2.

Les moyens 22 sont formés par une premier 32 et un deuxième 34 éléments, de préférence identiques, déformables élastiquement et destinés à s'interposer respectivement entre la première extension axiale 28 de la planche de bord et la face plane 25, et entre la deuxième extension axiale 30 de la planche de bord et la face plane 27. Les éléments 32,34 sont disposés sur un axe Y2 orthogonal à l'axe X1. Au repos les élément 32, 34 ont une hauteur h supérieure à D' de manière à être déformés lorsque la cheminée pénètre dans le rétrécissement 22. Ainsi les éléments 32, 34 exercent respectivement un premier F1 et une deuxième F2 efforts de même direction et dans des sens opposés sur la cheminée 24. Par conséquent la cheminée, et donc la planche de bord sont soumises à deux forces antagonistes qui s'équilibrent, la planche de bord est alors centrée par rapport à la caisse.

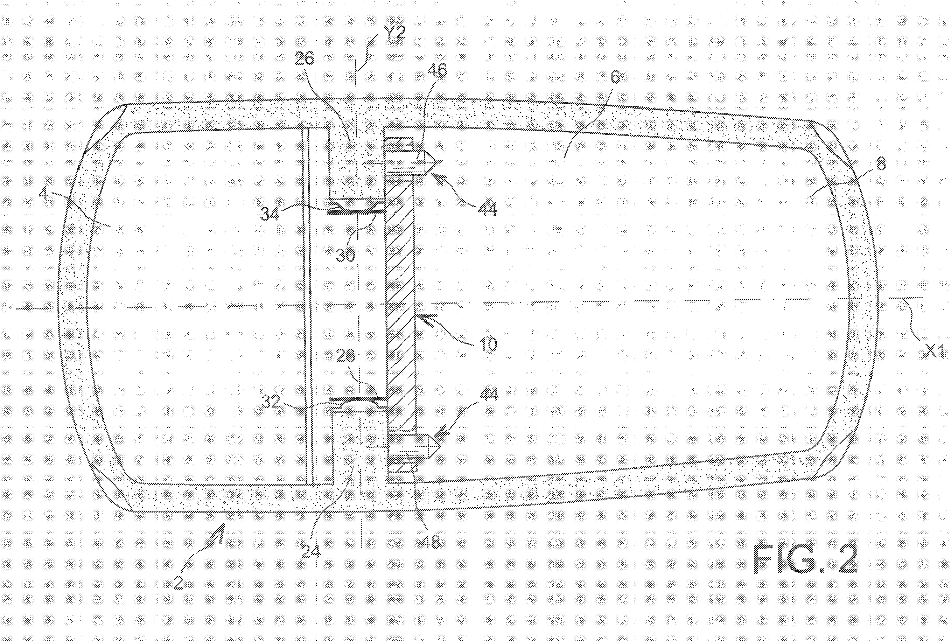

Sur la figure 2, on peut voir la planche de bord 10 montée sur la caisse et les éléments 32,34 élastiques déformés.

On entend par élastiquement déformables, des éléments déformables de manière non définitive pour un effort de montage donné qui est supérieur aux efforts auxquels sera soumise la planche de bord pendant la durée de vie du véhicule automobile. Ainsi après montage, les éléments 32,34 maintiennent la planche de bord de manière rigide et empêchent tout mouvement transversal de celle-ci relativement à la caisse 2.

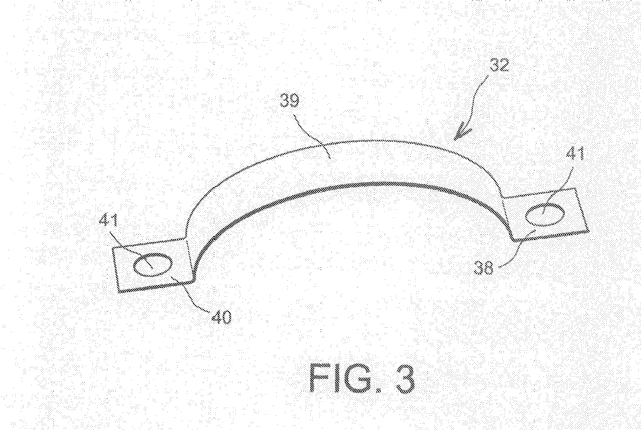

Sur la figure 3, on peut voir un exemple de réalisation de l'élément élastiquement déformable 32 formé par une lame de ressort comportant une partie convexe 39 et une première 38 et deuxième 40 extrémités sensiblement planes. La lame est destinée à être fixée sur la caisse, en particulier sur la face plane 25,27 ou sur les pans 28,30. La lame est par exemple fixée par un ensemble vis-écrou, par soudure, rivetage ou sertissage des extrémités planes 38,40. Dans l'exemple représenté, les extrémités 38,40 comportent chacune un orifice 41 pour permettre le vissage da la lame sur la caisse. L'élément élastique 34 peut être identique à l'élément 32.

La lame de ressort est par exemple réalisée par une ou plusieurs bandes de tôle à ressort cintrées de manière à leur donner leur forme définitive. Il est également envisageable de prévoir d'utiliser des lames en matériau plastique, par exemple en polyoxyméthylène (POM).

Il est bien entendu que les éléments 32, 34 peuvent être réalisées par toute type d'élément élastiquement déformables dans les conditions données.

Le véhicule automobile selon la présente invention comporte également des moyens d'indexations axiale et verticale 44 de la planche de bord 10 relativement à la caisse 2.

Les moyens d'indexation verticale 44 comportent, dans l'exemple représenté, des premier 46 et deuxième 48 doigts axiaux destinées à coopérer respectivement avec des première et deuxième boutonnières 50,52.

Dans l'exemple représenté, les premier et deuxième doigts 46,48 sont portés par la caisse 2, plus particulièrement par les première et deuxième saillies transversales 24,26 et s'étendent vers l'arrière. Les boutonnières sont quant à elles pratiquées dans la planche de bord. La position des doigts et des boutonnières, ainsi que leur taille sont choisies de manière à ce que lors du montage de la planche de bord sur la caisse, la position selon l'axe vertical de la planche de bord 10 soit la position souhaitée.

Il est bien entendu que des moyens d'indexation verticales ne comportant qu'un doigt ou plus deux doigts ne sort par du cadre de la présente invention.

Il est bien entendu que les doigts peuvent être portés par la planche de bord et les boutonnières pratiquées dans la caisse, ou que la caisse peut comporter un doigt et une boutonnière et la planche de bord une boutonnière et un doigt.

L'indexation axiale de la planche de bord s'effectue par exemple par serrage de la traverse de la planche de bord par boulonnage jusqu'à ce que celle-ci vienne en contact des saillies transversales 24, 26. En effet,la position de saillies transversales 24,26 peut être fixée précisément. Ainsi dans l'exemple représenté, les moyens d'indexation verticale 44 forment également les moyens d'indexation axiale.

Dans l'exemple représenté, les lames sont placées au niveau du rétrécissement transversal, mais on pourrait prévoir de les placer au niveau des flancs 12,14 de la caisse de manière à ce qu'elles exercent leur effort sur les extrémités 16, 18 de la traverse 11.

Nous allons maintenant décrire le procédé de fabrication du véhicule automobile, en particulier le procédé d'assemblage de la planche de bord et de la caisse.

Lors d'une première étape, les première et deuxième lames de ressort 32,34 sont fixées sur la caisse en des positions symétrique par rapport à l'axe X1 de la caisse, par exemple par vissage.

Lors d'une deuxième étape, la planche de bord 10 est placée à l'intérieur de la caisse de manière à ce que la cheminée 24 soit en regard du rétrécissement et que les axes X1 et X2 soient sensiblement alignées (figure 1).

Dans une troisième étape, la planche de bord 10 est déplacée axialement vers l'avant de manière à ce que les pans 28,30 pénètrent dans le rétrécissement et que les lames se déforment (figure 2). La planche de bord est alors soumise aux efforts F1 et F2 opposées qui déterminent de manière automatique la position centrée de la planche de bord dans l'habitacle. Aucune fixation particulière n'est alors nécessaire pour fixer la position transversale de la planche par rapport à la caisse.

Dans une quatrième étape, les positions axiale et verticales sont fixées.

Il est bien entendu que les moyens de centrage automatique sont utilisables pour tout dispositif nécessitant un tel centrage rapide, sûr et de faible coût de revient.

La présente invention s'applique notamment à l'industrie automobile.

## Revendications

1. Ensemble d'un premier (10) et deuxième éléments (2) d'un véhicule automobile, le premier élément (10) étant délimité par au moins une première (28) et une deuxième extrémités (30) transversales destinées à s'insérer au moins en partie entre une troisième (25) et quatrième (27) extrémités transversales respectivement, lesdites troisième (25) et quatrième (27) extrémités délimitant transversalement au moins partiellement le deuxième élément, **caractérisé en ce qu'**il comporte des premier et deuxième moyens (22) de centrage automatique du premier élément (10) dans le deuxième élément (2), lesdits moyens de centrage automatique (22) étant destinés à être disposés respectivement entre la première (28) et la troisième (25) extrémités et entre la deuxième (30) et quatrième (27) extrémités.

2. Ensemble selon la revendication 1 dans lequel les premier et deuxième moyens (22) sont des moyens élastiquement déformables destinés à appliquer respectivement un premier (F1) et deuxième (F2) efforts de même direction transversale et de sens opposé.

3. Ensemble selon la revendication 1 ou 2 dans lequel le premier élément (10) comporte une traverse (11) et un premier et deuxième pans perpendiculaires à la traverse, destinés à pénétrer entre les troisième (25) et quatrième (27) extrémités du deuxième élément (2), et dans lequel les première (28) et deuxième (30) extrémités transversales sont respectivement portées par les premier et deuxième pans.

4. Ensemble selon la revendication 1 ou 2 dans lequel le premier élément (10) comporte une traverse (11) délimitée transversalement par les première (28) et deuxième (30) extrémités transversales.

5. Ensemble selon l'une des revendications précédentes dans lequel le premier élément est formé par une planche de bord du véhicule automobile et le deuxième élément (2) est formé par la caisse du véhicule automobile.

6. Ensemble selon la revendication précédente dans lequel les premier (32) et deuxième (34) moyens de centrage automatique (22) sont fixés sur la caisse (2).

7. Ensemble selon l'une quelconque des revendications précédentes dans lequel chaque moyen (22) de centrage automatique est formé par une lame de ressort (32,34) convexe.

8. Ensemble selon la revendication précédente dans lequel les lames de ressort (32,34) comportent des première et deuxième extrémités axiales (38,40), par lesquelles elles sont fixées à la caisse (2) .

9. Ensemble selon la revendication 7 ou 8 dans lequel la fixation des lames de ressort (32,34) à la caisse (2) s'effectue par vissage.

10. Ensemble selon l'une quelconque des revendications précédentes comportant également des moyens de positionnement axial et vertical (44) du premier élément (10) relativement au deuxième élément (2).

11. Ensemble selon la revendication précédente dans lequel les moyens de positionnement vertical (44) comportent au moins une extension axiale (46,48) sur au moins le premier (10) ou le deuxième (2) élément, et un orifice (50,52) pratiqué dans au moins l'un ou l'autre du deuxième (2) ou premier (10) élément.

12. Ensemble selon la revendication précédente dans lequel les moyens de positionnement vertical (44) comportent deux extensions axiales (46,48) sur au moins le premier (10) ou le deuxième (2) éléments et deux orifices (50,52) pratiqués dans au moins l'un ou l'autre du deuxième (2) ou premier (10) élément.

13. Procédé d'assemblage d'un ensemble selon l'une quelconque des revendications précédentes **caractérisé en ce qu'**il comporte entre autre une étape préalable de fixation des premier et deuxième moyens de centrage automatique sur la caisse et une étape ultérieure d'insertion de la planche de bord (10) entre les troisième (25) et quatrième (27) extrémités transversales de la caisse (2).
